# EUROPEAN PATENT APPLICATION

(11) **EP 4 442 139 A1**
(43) Date of publication of application: **09.10.2024**
(21) Application number: 23737048.1
(22) Date of filing: 04.01.2023
(51) Int. Cl.: A24F 40/46

(54) **AEROSOL GENERATING DEVICE AND RESISTIVE HEATER FOR AEROSOL GENERATING DEVICE**

(30) Priority: 04.01.2022 CN 202210001021
(71) Applicant: Shenzhen First Union Technology Co., Ltd., Shenzhen, Guangdong 518000 (CN)
(72) Inventor: WU, Jian, Shenzhen, Guangdong 518000 (CN); XU, Zhongli, Shenzhen, Guangdong 518000 (CN); LI, Yonghai, Shenzhen, Guangdong 518000 (CN)
(74) Representative: Jacob, Reuben Ellis
(86) International application number: PCT/CN2023/070456
(87) International publication number: WO 2023/131185

(57) **Abstract**

Disclosed in the present application are an aerosol generating device and a resistive heater for an aerosol generating device. The resistive heater comprises a resistive heating element, and a first electrically conductive pin and a second electrically conductive pin which are used for supplying power to the resistive heating element. The first electrically conductive pin comprises a first section and a second section, the second section having a resistivity less than that of the first section. The first section is connected to the resistive heating element. The first section comprises a first galvanic couple material and the second electrically conductive pin comprises a second galvanic couple material different from the first galvanic couple material, so that a thermocouple used for sensing the temperature of the resistive heating element is formed between the first section and the second electrically conductive pin. In said resistive heater, the first electrically conductive pin having different sections and the second electrically conductive pin form the thermocouple used for sensing the temperature of the resistive heating element, so that the electrically conductive pins have a lower resistance loss in power supply.

## Description

### CROSS-REFERENCE TO RELATED APPLICATIONS

This application claims priority to Chinese Patent Application No. 202210001021.X, filed with the China National Intellectual Property Administration on January 4, 2022, entitled "AEROSOL GENERATING DEVICE AND RESISTIVE HEATER FOR AEROSOL GENERATING DEVICE", which is incorporated by reference herein in its entirety.

### TECHNICAL FIELD

Embodiments of this application relate to the technical field of heat-not-burn cigarette devices, and in particular, to an aerosol generating device and a resistive heater for an aerosol generating device.

### BACKGROUND

During use of smoking products (such as cigarettes or cigars), tobacco is burnt to produce smoke. Attempts are made to manufacture products that release compounds without burning of tobacco to replace these tobacco-burning products.

A heating device is an example of the products, which releases compounds by heating rather than burning materials. For example, the materials may be tobacco or non-tobacco products that may or may not include nicotine. In the prior art, tobacco or non-tobacco products are heated through a resistive heater, and a temperature of the resistive heater is calculated by detecting a resistance of the resistive heater.

### SUMMARY

An embodiment of this application provides a resistive heater for an aerosol generating device, including:

a resistive heating element, and a first electrically conductive pin and a second electrically conductive pin configured to supply power to the resistive heating element.

The first electrically conductive pin includes a first section and a second section, the second section has a resistivity less than that of the first section, and the first section is connected to the resistive heating element.

The first section includes a first galvanic couple material, and the second electrically conductive pin includes a second galvanic couple material different from the first galvanic couple material, so that a thermocouple configured to sense a temperature of the resistive heating element is formed between the first section and the second electrically conductive pin.

In a preferred embodiment, the second section includes gold, silver, copper, nickel, or an alloy thereof.

In a preferred embodiment, the second section has a length greater than that of the first section.

In a preferred embodiment, the first section has a length in a range of 5-10 millimeters (mm).

In a preferred embodiment, the second section has a length in a range of 20-40 mm.

In a preferred embodiment, the first electrically conductive pin includes:
a first galvanic couple wire, made of the first galvanic couple material; and
an electrically conductive coating or wrapping layer, formed on a partial surface of the first galvanic couple wire, where the first section is defined by an area of the first galvanic couple wire not surrounded by the electrically conductive coating or wrapping layer, and the second section is defined by an area of the first galvanic couple wire surrounded by the electrically conductive coating or wrapping layer.

In a preferred embodiment, the first galvanic couple wire has an outer diameter in a range of 0.2-2.0 mm.

In a preferred embodiment, the electrically conductive coating or wrapping layer has a thickness in a range of 0.1-1.0 mm.

In a preferred embodiment, the resistive heating element includes a spiral heating coil extending in a length direction of the resistive heater, and a cross-section of a wire material of the spiral heating coil is constructed in a flat shape.

Another embodiment of this application further provides an aerosol generating device configured to heat an aerosol generation product to generate aerosols, including:
a chamber, configured to receive the aerosol generation product; and
a resistive heater, at least partially extending within the chamber, and configured to heat the aerosol generation product received in the chamber, where the resistive heater includes:
   a resistive heating element, and a first electrically conductive pin and a second electrically conductive pin configured to supply power to the resistive heating element.

The first electrically conductive pin includes a first section and a second section. The second section has a resistivity less than that of the first section. The first section is connected to the resistive heating element.

The first section includes a first galvanic couple material, and the second electrically conductive pin includes a second galvanic couple material different from the first galvanic couple material, so that a thermocouple configured to sense a temperature of the resistive heating element is formed between the first section and the second electrically conductive pin.

In the resistive heater, the first electrically conductive pin having different sections and the second electrically conductive pin form the thermocouple configured to sense the temperature of the resistive heating element, so that the electrically conductive pins have a lower resistance loss during power supply.

### BRIEF DESCRIPTION OF THE DRAWINGS

One or more embodiments are exemplarily described with reference to corresponding figures in drawings, and the exemplary descriptions are not to be construed as a limitation on the embodiments. Elements in the drawings having the same reference numeral represent similar elements, and unless otherwise particularly stated, the figures in the drawings are not drawn to scale.
FIG. 1 is a schematic diagram of an aerosol generating device according to an embodiment.
FIG. 2 is a schematic exploded view of an embodiment of a resistive heater in FIG. 1.
FIG. 3 is a schematic sectional view of a resistive heating coil in FIG. 2 from a perspective.
FIG. 4 is a schematic diagram of an embodiment of a first electrically conductive pin in FIG. 2.
FIG. 5 is a schematic diagram of an embodiment of a second electrically conductive pin in FIG. 2.
FIG. 6 is a schematic structural diagram of a resistive heating coil according to another embodiment.
FIG. 7 is a schematic diagram of an embodiment of a first electrically conductive pin in FIG. 6.
FIG. 8 is a schematic diagram of an embodiment of a second electrically conductive pin in FIG. 6.
FIG. 9 is a schematic structural diagram of a resistive heater according to another embodiment.
FIG. 10 is a schematic structural diagram of a resistive heater according to another embodiment.
FIG. 11 is a schematic structural diagram of a resistive heater according to another embodiment.
FIG. 12 is a schematic structural diagram of a resistive heater according to another embodiment.

### DETAILED DESCRIPTION

For ease of understanding of this application, this application is described below in more detail with reference to drawings and specific implementations.

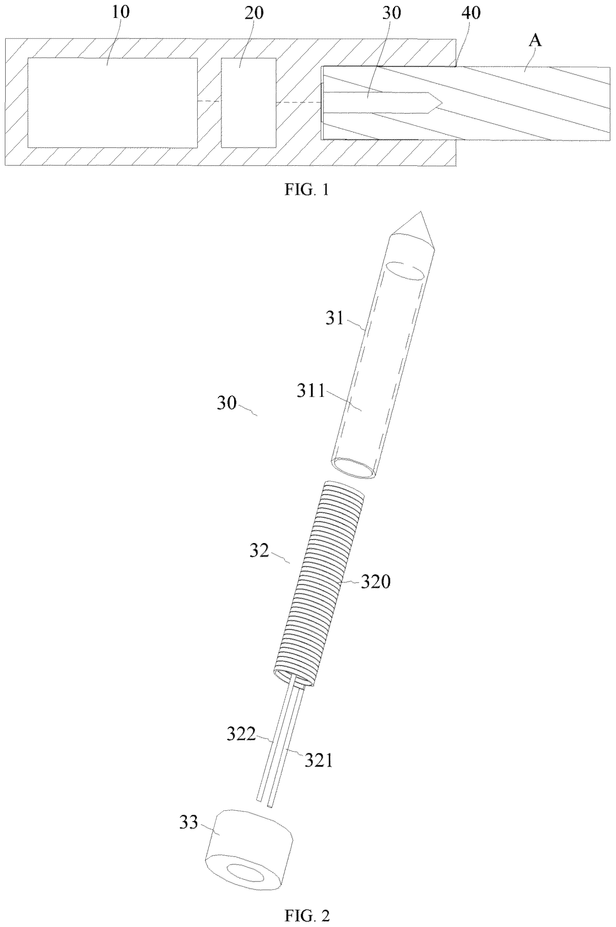

An embodiment of this application provides an aerosol generating device. For a structure thereof, reference may be made to FIG. 1. The aerosol generating device includes:
a chamber, having an opening 40, where an aerosol generation product A is removably received in the chamber through the opening 40 during use; and
a resistive heater 30, at least partially extending within the chamber, where when the aerosol generation product A is received in the chamber, the resistive heater is inserted into the aerosol generation product A for heating, so that the aerosol generation product A releases various volatile compounds, which are formed merely by heating;
a core 10, configured to supply power; and
a circuit 20, configured to guide a current between the core 10 and the resistive heater 30.

In a preferred embodiment, the resistive heater 30 is substantially in a shape of a pin or a needle, thereby facilitating insertion into the aerosol generation product A. In addition, the resistive heater 30 may have a length in a range of about 12-19 millimeters (mm) and an outer diameter in a range of about 2-4 mm.

Further, in an optional implementation, the aerosol generation product A is preferably made of a tobacco-containing material that releases a volatile compound from a substrate when being heated, or may be a non-tobacco material adapted for electric heating and generating smoke after being heated. The aerosol generation product A is preferably made of a solid substrate. The solid substrate may include one or more of powders, particles, fragmented strips, stripes, or flakes of one or more of vanilla leaves, tobacco leaves, homogeneous tobacco, and expanded tobacco. Alternatively, the solid substrate may include additional tobacco or non-tobacco volatile aroma compounds to be released when the substrate is heated.

During implementation, the resistive heater 30 usually may include a resistive heating element and auxiliary substrates for assisting in fixing and manufacturing of the resistive heating element. For example, in some embodiments, the resistive heating element is in a shape or form of a spiral coil. Alternatively, in some other embodiments, the resistive heating element is in a form of an electrically conductive trajectory combined with a substrate. Alternatively, in some other embodiments, the resistive heating element is in a shape of a thin substrate.

Further, FIG. 2 is a schematic exploded view of parts of the resistive heater 30 before fitting according to an embodiment. The parts include:
a heater shell 31, constructed in a shape of a pin or a needle with a hollow 311, having a front end in a shape of a conical tip to facilitate insertion into the aerosol generation product A, and having an opening at a rear end to facilitate fitting of functional components inside the heater shell;
a resistive heating element 32, configured for heating. Specifically, the resistive heating element has the following structures: a spiral resistive heating coil 320 constructed to extend along a part of the heater shell 31 in an axial direction, a first electrically conductive pin 321 connected to a lower end of the resistive heating coil 320, and a second electrically conductive pin 322 connected to an upper end of the resistive heating coil 320. The first electrically conductive pin 321 and the second electrically conductive pin 322 are configured to supply power to the resistive heating coil 320 during use.

In the embodiment shown in FIG. 2, the resistive heating coil 320 is fully fitted and retained within the hollow 311 of the heater shell 31, and after the fitting is completed, the resistive heating coil 320 and the heater shell 31 are thermally conductive to each other.

Further, in the preferred embodiment shown in FIG. 2, the resistive heater 30 further includes a base or flange 33. In the figure, the base or flange 33 is made of heat-resistant materials such as ceramic or PEEK, and is preferably in an annular shape. During the fitting, the lower end of the heater shell 31 is fixed to the base or flange 33 through a high-temperature adhesive or molding such as insert molding. In this way, the aerosol generating device can fix the base or flange 33 through supporting, clamping, or retaining, thereby achieving stable mounting and retaining of the resistive heater 30. Certainly, after the base or flange 33 is fitted to the lower end of the heater shell 31, the first electrically conductive pin 321 and the second electrically conductive pin 322 extend through a middle hole of the base or flange 33, facilitating connection to the circuit 20.

In an optional embodiment, the resistive heating coil 320 is made of a metal material with a proper impedance, a metal alloy, graphite, carbon, conductive ceramic, or a composite material of a ceramic material and a metal material. A proper metal or alloy material includes at least one of nickel, cobalt, zirconium, titanium, a nickel alloy, a cobalt alloy, a zirconium alloy, a titanium alloy, a nickel-chromium alloy, a nickel-iron alloy, an iron-chromium alloy, an iron-chromium-aluminum alloy, a titanium alloy, an iron-manganese-aluminum based alloy, or stainless steel.

The heater shell 31 is made of a heat-resistant and thermally conductive material such as glass, ceramic, metal, or alloys, for example, stainless steel. Certainly, after the fitting, inner walls of the hollows 311 of the resistive heating coil 320 and the heater shell 31 abut against each other to conduct heat. In addition, when the heater shell 31 is made of metal or alloys, the resistive heating coil and the heater shell are insulated from each other. For example, insulation may be formed between contact surfaces by gluing, surface oxidation, or applying an insulation layer.

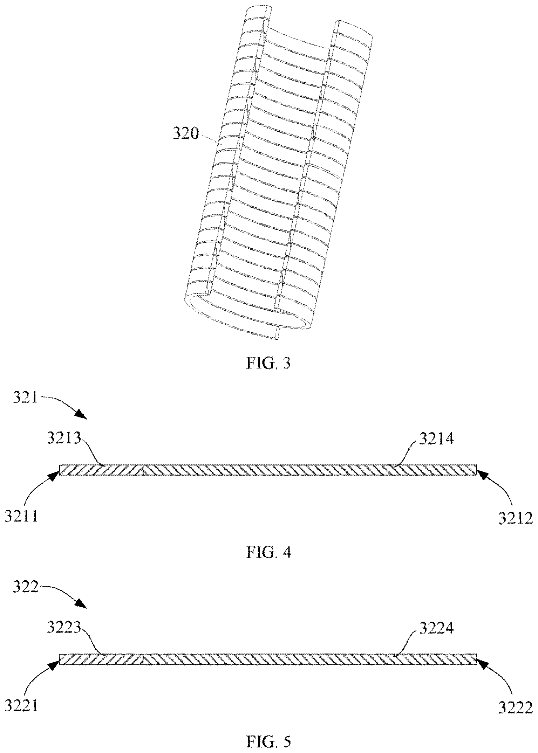

FIG. 3 is a schematic sectional view of the resistive heating coil 320 in FIG. 2 from a perspective. A shape of a section of a wire material of the resistive heating coil 320 is different from a conventional circular wide or flat shape. In the preferred implementation shown in FIG. 3, the section of the wire material of the resistive heating coil 320 has a size extending in a longitudinal direction greater than a size extending in a radial direction perpendicular to a portion extending in the longitudinal direction, so that the resistive heating coil 320 is in a flat rectangular shape.

Simply put, compared with a conventional spiral heating coil formed by wires with circular sections, the above constructed resistive heating coil 320 has a wire material in a completely or at least partially flat form. Therefore, the wire material extends to a smaller extent in the radial direction. In this way, an energy loss in the resistive heating coil 320 can be reduced. In particular, heat transfer can be improved.

In other variable optional embodiments, the resistive heating coil 320 may be manufactured by using a conventional wire material with a circular section.

Further, as shown in FIG. 2, the first electrically conductive pin 321 and the second electrically conductive pin 322 are slender leads.

Further, FIG. 4 is a schematic diagram of an embodiment of the first electrically conductive pin 321. The first electrically conductive pin 321 includes a first end 3211 and a second end 3212 opposite each other. During use, the first end 3211 is an end connected to the resistive heating coil 320, and the second end 3212 is an end connected to the circuit 20. Specifically, during the fitting or implementation, the first end 3211 may be electrically connected to the resistive heating coil 320 through welding, crimping, or the like, and the second end 3212 may be electrically connected to the circuit 20 through welding or the like. The first electrically conductive pin 321 further includes a first section 3213 and a second section 3214. The first section 3213 is adjacent to the first end 3211, and the second section 3214 is adjacent to the section 3212. During implementation, the first section 3213 is made of a galvanic couple wire material, and the second section 3214 is made of metal or alloys with excellent conductivity. The first section 3213 and the second section 3214 with different materials may be obtained separately and then connected through welding to form the first electrically conductive pin 321.

In some specific implementations, the first electrically conductive pin 321 is formed by connecting in series or welding two electrically conductive wires with different materials. For example, a nickel-chromium alloy galvanic couple wire is welded and connected in series to a copper wire to form the first electrically conductive pin 321, the first section 3213 is defined and formed by the nickel-chromium alloy galvanic couple wire, and the second section 3214 is defined and formed by the copper wire.

Further, FIG. 5 is a schematic diagram of an embodiment of the second electrically conductive pin 322. The first electrically conductive pin 322 includes a section 3223 close to the first end 3221 and a section 3224 close to the second end 3222. Likewise, the section 3223 is made of a galvanic couple wire material, and the section 3224 is made of metal or alloys with excellent conductivity.

The first section 3213 of the first electrically conductive pin 321 and the section 3223 of the second electrically conductive pin 322 are made of different galvanic couple materials. For example, they are made of two different materials of galvanic couple materials such as nickel, a nickel-chromium alloy, a nickel-silicon alloy, nickel chromium-Kao copper, constantan, and an iron-chromium alloy. In this way, a thermocouple that can detect a temperature of the resistive heating coil 320 is formed between the first section 3213 of the first electrically conductive pin 321 and the section 3223 of the second electrically conductive pin 322, thereby obtaining the temperature of the resistive heating coil 320.

Further, the second section 3214 of the first electrically conductive pin 321 and the section 3224 of the second electrically conductive pin 322 are both configured to guide a current for power supply. Therefore, during implementation, the second section 3214 of the first electrically conductive pin 321 and the section 3224 of the second electrically conductive pin 322 are made of materials with a high conductivity and a low resistance, such as gold, silver, copper, nickel, or an alloy thereof.

Further, in an embodiment, the second section 3214 of the first electrically conductive pin 321 has a length greater than that of the first section 3213, and the section 3224 of the second electrically conductive pin 322 has a length greater than that of the section 3223. For example, in some specific implementations, the second section 3214 of the first electrically conductive pin 321 has an extension length in a range of about 20-40 mm, and the first section 3213 of the first electrically conductive pin 321 has an extension length in a range of about 5-10 mm.

Further, during implementation, the second section 3214 of the first electrically conductive pin 321 has a resistance or a resistivity less than that of the first section 3213, and the section 3224 of the second electrically conductive pin 322 has a resistance or a resistivity less than that of the section 3223.

The first electrically conductive pin 321 and the second electrically conductive pin 322 each having two different sections have lower resistances than a conductive pin made of a galvanic couple material.

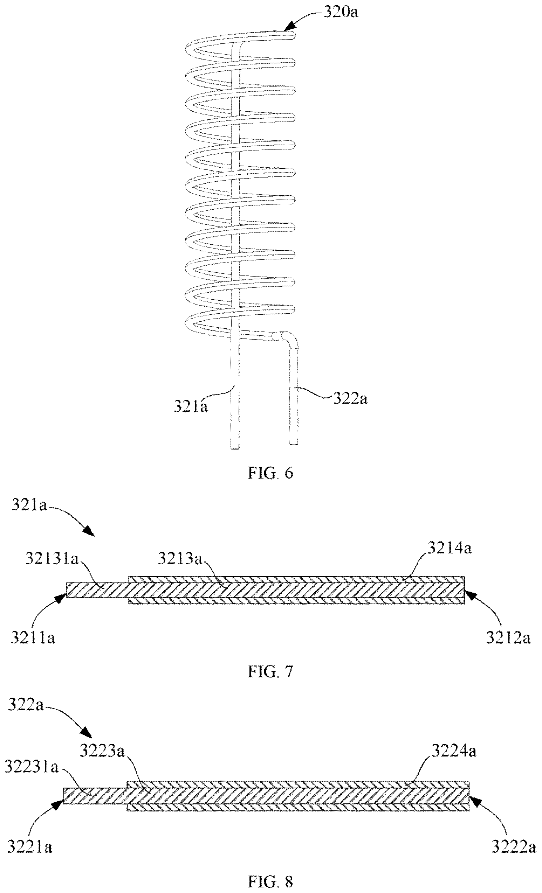

Further, FIG. 6 is a schematic diagram of a resistive heating coil 320a according to another embodiment. The resistive heating coil 320a in this implementation is made of a conventional wire material with a circular section. Two opposite ends of the resistive heating coil 320a are respectively connected with a third electrically conductive pin 321a (equivalent to the above first electrically conductive pin) and a fourth electrically conductive pin 322a (equivalent to the above second electrically conductive pin), and are connected to the circuit 20 to supply power to the resistive heating coil 320a.

Further, FIG. 7 is a schematic diagram of the third electrically conductive pin 321a in FIG. 6. The third electrically conductive pin 321a includes:
a slender first galvanic couple wire 3213a; and
an electrically conductive coating or wrapping layer 3214a, formed on a partial surface of the first galvanic couple wire 3213a through spraying or deposition.

During implementation, the electrically conductive coating or wrapping layer 3214a is formed or wrapped on a partial surface of the first galvanic couple wire 3213a close to a fourth end 3212a. The first galvanic couple wire 3213a further has, at a position close to a third end 3211a, a section 32131a not wrapped by the electrically conductive coating or wrapping layer 3214a.

In some embodiments, the electrically conductive coating or wrapping layer 3214a is made of a material with a low resistivity, for example, gold, silver, copper, or the alloy thereof mentioned above.

Likewise, FIG. 8 is a schematic diagram of the fourth electrically conductive pin 322a. The fourth electrically conductive pin 322a includes:
a second galvanic couple wire 3223a, made of a galvanic couple material different from that of the first galvanic couple wire 3213a.

The fourth electrically conductive pin 322a further includes an electrically conductive coating or wrapping layer 3224a formed on a partial surface of the second galvanic couple wire 3223a adjacent to a sixth end 3222a through spraying or deposition.

Likewise, the second galvanic couple wire 3223a has a section 32231a adjacent to a fifth end 3221a and not wrapped by the electrically conductive coating or wrapping layer 3224a. During use, a thermocouple that can sense the resistive heating coil 320a can be formed between the section 32231a and the section 32131a.

In some specific implementations, the first galvanic couple wire 3213a and/or the second galvanic couple wire 3223a has an outer diameter in a range of about 0.2-2.0 mm, and the electrically conductive coating or wrapping layer 3214a and/or the electrically conductive coating or wrapping layer 3224a has a thickness in a range of about 0.1-1.0 mm.

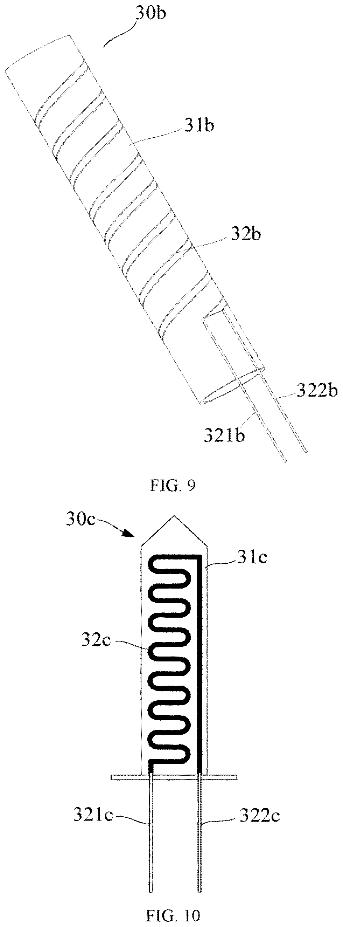

Further, FIG. 9 is a schematic diagram of a resistive heater 30b according to another variable embodiment. The resistive heater 30b includes:
an electrically insulative substrate 31b, constructed in a tubular shape, where during use, a tubular hollow of the electrically insulative substrate 31b defines and forms the chamber that accommodates and heats the aerosol generation product A;
a resistive heating element 32b, formed on the electrically insulative substrate 31b and surrounding the electrically insulative substrate 31b; and a fifth electrically conductive pin 321b and a sixth electrically conductive pin 322b, configured to supply power to the resistive heating element 32b. In this implementation, the resistive heating element 32b is in a form of an electrically conductive trajectory formed on the electrically insulative substrate 31b through deposition, printing, or the like. Alternatively, in some variable implementations, the resistive heating element 32b may be in a form of a heating mesh, a heating film, or the like wound or wrapped on the electrically insulative substrate 31b. During implementation, the electrically insulative substrate 31b is preferably made of ceramic, metal, or the like with a high thermal conductivity. During use, the electrically insulative substrate 31b receives and conducts heat from the resistive heating element 32b, to heat the aerosol generation product A received in the tubular hollow.

The fifth electrically conductive pin 321b and the sixth electrically conductive pin 322b may adopt the above construction design of the first electrically conductive pin 321 (the third electrically conductive pin 321a) and the second electrically conductive pin 322 (the fourth electrically conductive pin 322a). In this way, a thermocouple configured to sense a temperature of the resistive heating element 32b can be formed between the fifth electrically conductive pin 321b and the sixth electrically conductive pin 322b during supplying of power through the fifth electrically conductive pin and the sixth electrically conductive pin.

Alternatively, FIG. 10 is a schematic diagram of a resistive heater 30c according to another embodiment. The resistive heater 30c includes:
an electrically insulative substrate 31b, constructed in a shape of a pin, or a needle, or a sheet, or a plate, or the like, thereby facilitating insertion into the aerosol generation product A received in the chamber; and
an electrically conductive trajectory 32c, formed on the electrically insulative substrate 31b through printing, deposition, or the like, where the electrically conductive trajectory 32c is a resistive material, thereby heating the aerosol generation product A when being powered by a seventh electrically conductive pin 321c and an eighth electrically conductive pin 322c.

Likewise, the seventh electrically conductive pin 321c and the eighth electrically conductive pin 322c may adopt the above construction design of the first electrically conductive pin 321 (the third electrically conductive pin 321a) and the second electrically conductive pin 322 (the fourth electrically conductive pin 322a). In this way, a thermocouple configured to sense a temperature of the resistive heater 30c can be formed between the seventh electrically conductive pin 321c and the eighth electrically conductive pin 322c during supplying of power through the seventh electrically conductive pin and the seventh electrically conductive pin.

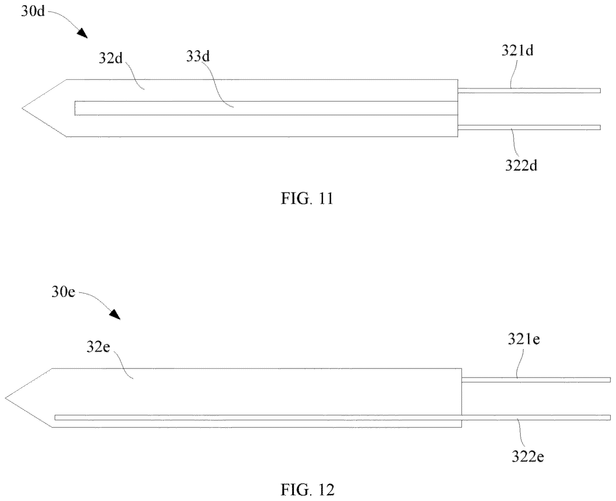

Further, FIG. 11 is a schematic diagram of a resistive heater 30d according to another embodiment. The resistive heater 30d includes a resistive heating member 32d constructed in a shape of a pin, or a needle, or a sheet. In this implementation, the resistive heating member 32d is made of an electrically conductive ceramic material with a proper resistivity, such as titanium silicon carbon electrically conductive ceramic, or titanium nitride or titanium carbide electrically conductive ceramic. To guide a current to flow through the resistive heating member 32d as a whole to form a heating effect, a gap or slit 33d is provided on the resistive heating member 32d. A ninth electrically conductive pin 321d and a tenth electrically conductive pin 322d are connected to end portions of the resistive heating member 32d located on two sides of the gap or slit 33d through welding or the like, thereby supplying power to the resistive heating member 32d.

Likewise, the ninth electrically conductive pin 321d and the tenth electrically conductive pin 322d may adopt the above construction design of the first electrically conductive pin 321 (the third electrically conductive pin 321a) and the second electrically conductive pin 322 (the fourth electrically conductive pin 322a). In this way, a thermocouple configured to sense a temperature of the resistive heating member 32d can be formed between the ninth electrically conductive pin 321d and the tenth electrically conductive pin 322d during supplying of power through the ninth electrically conductive pin and the tenth electrically conductive pin.

Further, FIG. 12 is a schematic diagram of a resistive heater 30e according to another embodiment. The resistive heater 30e includes a resistive heating member 32e made of an electrically conductive ceramic material with a proper resistivity. During operation, a current flows through the resistive heating member 32e as a whole to form heating. Two ends of the resistive heating member 32e in a length direction are respectively connected with an eleventh electrically conductive pin 321e and a twelfth electrically conductive pin 322e through welding or the like, thereby supplying power to the resistive heating member 32e. Likewise, the eleventh electrically conductive pin 32le and the twelfth electrically conductive pin 322e may adopt the above construction design of the first electrically conductive pin 321 (the third electrically conductive pin 321a) and the second electrically conductive pin 322 (the fourth electrically conductive pin 322a). In this way, a thermocouple configured to sense a temperature of the resistive heating member 32e can be formed between the eleventh electrically conductive pin 321e and the twelfth electrically conductive pin 322e during supplying of power through the eleventh electrically conductive pin and the twelfth electrically conductive pin.

It should be noted that, the specification and the drawings of this application provide the preferred embodiments of this application, but this application is not limited to the embodiments described in this specification. Further, a person of ordinary skill in the art may make improvements or modifications based on the above descriptions, and all of the improvements and modifications shall fall within the protection scope of the appended claims of this application.

## Claims

1. A resistive heater for an aerosol generating device, comprising:
a resistive heating element, and a first electrically conductive pin and a second electrically conductive pin configured to supply power to the resistive heating element, wherein:
the first electrically conductive pin comprises a first section and a second section, the second section has a resistivity less than that of the first section, and the first section is connected to the resistive heating element; and
the first section comprises a first galvanic couple material, and the second electrically conductive pin comprises a second galvanic couple material different from the first galvanic couple material, so that a thermocouple configured to sense a temperature of the resistive heating element is formed between the first section and the second electrically conductive pin.

2. The resistive heater for an aerosol generating device according to claim 1, wherein the second section comprises gold, silver, copper, nickel, or an alloy thereof.

3. The resistive heater for an aerosol generating device according to claim 1 or 2, wherein the second section has a length greater than that of the first section.

4. The resistive heater for an aerosol generating device according to claim 3, wherein the first section has a length in a range of 5-10 mm.

5. The resistive heater for an aerosol generating device according to claim 3, wherein the second section has a length in a range of 20-40 mm.

6. The resistive heater for an aerosol generating device according to claim 1 or 2, wherein the first electrically conductive pin comprises:
a first galvanic couple wire, made of the first galvanic couple material; and
an electrically conductive coating or wrapping layer, formed on a partial surface of the first galvanic couple wire, wherein the first section is defined by an area of the first galvanic couple wire not surrounded by the electrically conductive coating or wrapping layer, and the second section is defined by an area of the first galvanic couple wire surrounded by the electrically conductive coating or wrapping layer.

7. The resistive heater for an aerosol generating device according to claim 6, wherein the first galvanic couple wire has an outer diameter in a range of 0.2-2.0 mm.

8. The resistive heater for an aerosol generating device according to claim 6, wherein the electrically conductive coating or wrapping layer has a thickness in a range of 0.1-1.0 mm.

9. The resistive heater for an aerosol generating device according to claim 1 or 2, wherein the resistive heating element comprises a spiral heating coil extending in a length direction of the resistive heater, and a cross-section of a wire material of the spiral heating coil is constructed in a flat shape.

10. An aerosol generating device, configured to heat an aerosol generation product to generate aerosols, comprising:
a chamber, configured to receive the aerosol generation product; and
a resistive heater, at least partially extending within the chamber, and configured to heat the aerosol generation product received in the chamber, wherein the resistive heater comprises:
a resistive heating element, and a first electrically conductive pin and a second electrically conductive pin configured to supply power to the resistive heating element, wherein:
the first electrically conductive pin comprises a first section and a second section, the second section has a resistivity less than that of the first section, and the first section is connected to the resistive heating element; and
the first section comprises a first galvanic couple material, and the second electrically conductive pin comprises a second galvanic couple material different from the first galvanic couple material, so that a thermocouple configured to sense a temperature of the resistive heating element is formed between the first section and the second electrically conductive pin.
